# EUROPEAN PATENT APPLICATION

(11) **EP 3 132 876 A1**
(43) Date of publication of application: **22.02.2017**
(21) Application number: 15779270.6
(22) Date of filing: 02.04.2015
(51) Int. Cl.: B23K 9/02

(54) **HORIZONTAL BUTT JOINT HIGH DEPOSITION RATE WELDING APPARATUS AND METHOD**

(30) Priority: 17.04.2014 KR 20140045761; 16.02.2015 KR 20150023007
(71) Applicant: Daewoo Shipbuilding & Marine Engineering Co., Ltd., Seoul 100-180 (KR)
(72) Inventor: KIM, Young Joo, Geoje-si Gyeongsangnam-do 656-130 (KR)
(74) Representative: Ipside
(86) International application number: PCT/KR2015/003299
(87) International publication number: WO 2015/160122

(57) **Abstract**

The present invention provides an apparatus and a method for high deposition welding a horizontal butt joint which can form a high deposition welded part while forming a root part when high deposition welding is carried out relative to a bevel in case of automatic welding of a horizontal butt joint, thereby achieving high deposition welding without any defect of the inside and surface of a welded cross section and reducing the number of welding passes. The horizontal butt joint high deposition welding apparatus is installed on a traveling device part in a welding direction by a welding tip so as to move in a forward direction of welding progress and a horizontal butt joint high deposition welding method, thereby preventing the molten metal from running down, allowing a user to easily handle the apparatus, reducing weight, and completing surface beads because a lower part is filled with molten metal.

## Description

### BACKGROUND OF THE INVENTION

### Field of the Invention

The present invention relates to a horizontal butt joint welding, and more particularly, to a horizontal butt joint high deposition welding apparatus and a method therefor, which can weld a joint by high deposition welding including welding of a root part.

### Background Art

In general, a butt joint welding is to weld parent metals facing each other to be connected with each other, and is frequently used when iron plates are connected.

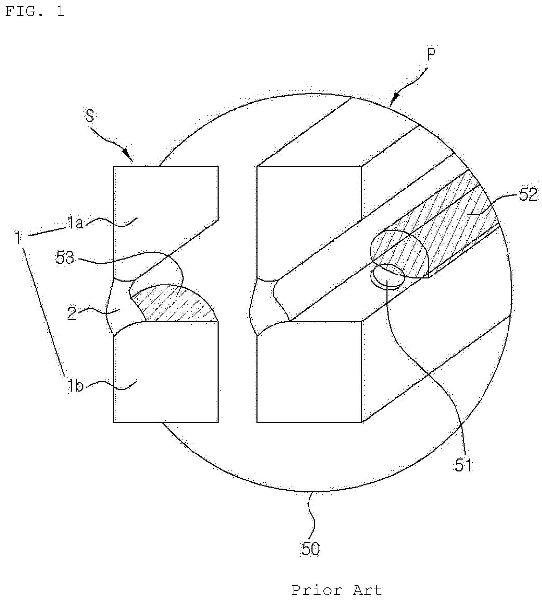

FIG. 1 is a view showing a welded state after root pass at the time of a conventional automatic welding.

In FIG. 1, the part S is a sectional view and the part P is a partially cutaway perspective view. Hereinafter, in the specification and drawings of the present invention, the part S indicates a sectional view and the part P indicates a partially cutaway perspective view.

As shown in FIG. 1, in case that two parent metals 1a and 1b facing each other lengthwise are butt-welded horizontally, the upper parent metal 1a and the lower parent metal 1b face each other and a welded joint becomes a bevel. Moreover, the upper parent metal 1a and the lower parent metal 1b are welded in a state where the bevel of the upper parent metal 1a is inclined upward and the lower parent metal 1b is beveled at right angles from the plane.

As described above, in case of applying flux cored arc welding using an automatic machine in relation with the horizontal butt joint, as shown in FIG. 1, the upper parent metal 1a and the lower parent metal 1b are arranged to have different gaps 3 according to a rate of production, and a root part 2 is formed when the gaps 3 are filled and root pass is first carried out on the back of a side where welding is carried out. In case that high deposition welding is carried out inside the bevel on which the root part 2 is formed, molten metal precedes a welding arc due to low viscosity of the molten metal and gravity acting to the molten metal so that the arc is formed on the molten metal. Because the arc formed on the molten metal is difficult to make the parent metal sufficiently penetrate, it frequently causes defects, such as incomplete fusion and slag inclusion in the welded metal.

Moreover, in case of a low arc force, the upper parent metal forms an unwelded macro cross-section 53 (See FIG. 1).

The arc force means power to push a molten pool, and generally, increases proportionally to the square of current and the double of voltage. In case that the arc force is weak, that is, in case that low current and low voltage are used, because arc radius 51 becomes smaller, molten metal 52 is formed small. Furthermore, a thin metal penetration is formed on the bottom surface of the parent metal because the force to push the small molten metal 52 also becomes smaller, and only the lower parent metal 1b is welded on the cross section of the welded joint because the molten metal is not pushed up to the bevel of the upper parent metal 1aaa, so that the upper parent metal 1a is welded while forming an unwelded macro cross section 53.

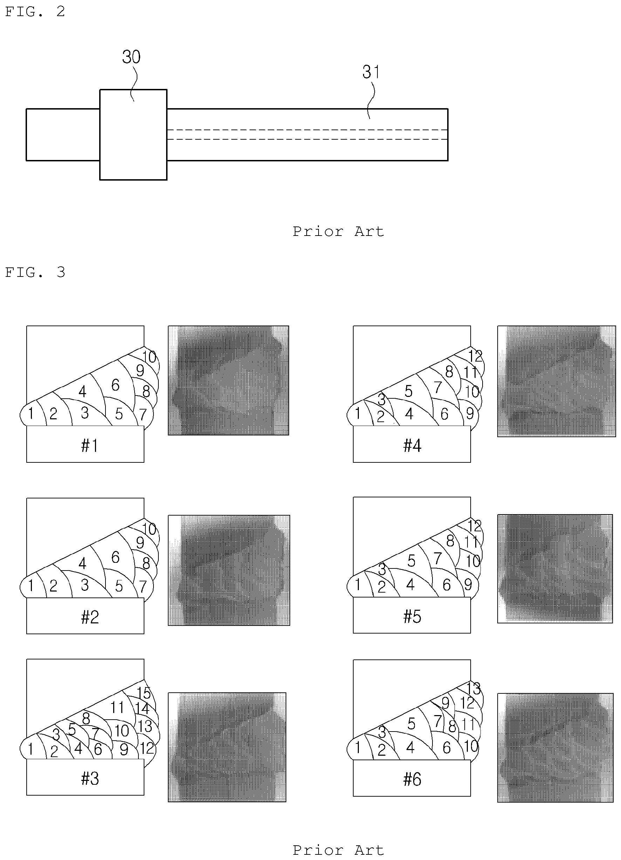

Additionally, because an end portion 31 of a general welding tip 30 is about 8mm, in case that it carries out weaving at a small and narrow space, the end portion 31 of the welding tip 30 gets in contact with the bevel and it frequently causes short. FIG. 2 is a view showing a conventional welding tip 30. In order to precisely weld the inside of the bevel, five to seven passes are needed. In addition, after welding the inside of the bevel is finished, in case that welding of the surface part is carried out, because welding bead deflection frequently occurs due to influences of the low viscosity of the molten metal and gravity acting to the molten metal, the top bead has four or five passes to precisely weld if possible.

FIG. 3 is a sectional view of welded parts #1 to #6 that parent metals with a thickness of 23mm are welded using a number of passes by the conventional welding apparatus. In case of the conventional welding method, a parent metal with a thickness of 15mm requires eight passes, and a parent metal with a thickness of 23mm 10 to 15 passes as shown in FIG. 3. Therefore, when the parent metal with a thickness of 23mm is welded by the conventional welding apparatus, the macro cross section 53 (areas of reference numbers 1, 3, 5, 8 and 9 of the welded cross section in FIG. 3), which has the unwelded side of the upper parent metal, is formed, and hence, the plural passes must be welded.

In other words, in the conventional welding apparatus, the root part 2 is formed by carrying out root pass to the gaps 3 determined by the thickness of the parent metal and deposited welding of the inside of the bevel is carried out after the root part 2 is formed. However, even in case that deposited welding is carried out according to the thickness of the parent metal, like the cross sections of the welded parts #1 to #6 shown in the drawing, the multi-layered passes (10 to 15 passes) must be welded by the small deposit amount, and hence, there is a limitation in improving productivity through reduction of the number of the passes.

### SUMMARY OF THE INVENTION

Accordingly, the present invention has been made in view of the above-mentioned problems occurring in the prior art, and it is an object of the present invention to provide automatic welding of a horizontal butt joint, and more particularly, an apparatus and a method for high deposition welding a horizontal butt joint which can form a high deposition welded part while forming a root part when high deposition welding is carried out relative to a bevel in case of automatic welding of a horizontal butt joint, thereby achieving high deposition welding without any defect of the inside and surface of a welded cross section and reducing the number of welding passes.

It is another object of the present invention to provide a horizontal butt joint high deposition welding apparatus which is installed on a traveling device part in a welding direction by a welding tip so as to move in a forward direction of welding progress and a horizontal butt joint high deposition welding method, thereby preventing the molten metal from running down, allowing a user to easily handle the apparatus, reducing weight, and completing surface beads because a lower part is filled with molten metal.

To accomplish the above object, according to the present invention, there is provided a horizontal butt joint high deposition welding apparatus including: a traveling device part for periodically repeating weaving and conveying of a welding tip in a specific direction relative to an upper parent metal and a lower parent metal; a welding torch which has a welding tip and is mounted on the traveling device part; a copper shoe device which is mounted on the traveling device part to be located in a welding direction by the welding tip; and a control unit for controlling welding conditions according to weaving positions of the welding torch in consideration of a bevel form of a horizontal welding joint, wherein the control unit conveys the traveling device part to perform weaving traveling along a plurality of nodal points and controls one of welding current, welding voltage, wire supply speed, traveling speed in a movement section between the nodal points, stopping time at the nodal points, weaving speed and weaving width to carry out high deposition welding relative to the bevels.

In the present invention, the copper shoe device includes a forward gas spraying part for spraying gas in the welding progress direction to prevent molten metal from running down.

In the present invention, an initial value is set according to a gap (G) between the upper parent metal and the lower parent metal and the thickness of the parent metals, and one of welding current, welding voltage, wire supply speed, traveling speed in a movement section between the nodal points, stopping time at the nodal points, weaving speed and weaving width is controlled to be changed in real time by the gap (G) between the upper parent metal and the lower parent metal.

If the entire stopping time for producing an indefective bead is T1, the stopping time at nodal points of a rear bead (B), which carries out welding of the inside of the bevel and the stopping time at nodal points between the rear bead (B) and a surface bead (F) are 0.2*T1 within an error range of about ± 10%, and the stopping time at the nodal point of the surface bead (F) is 0.8*T1 within an error range of about ±10%.

The wire supply speed is calculated to set an initial value at the nodal points for forming the rear bead (B) by the gap (G) and is calculated to increase more than the initial value at the nodal points located between the nodal points for forming the rear bead (B) and the surface bead (F) in proportion to the vertical width of the cross section of the bevel.

The control unit controls one of welding current, welding voltage, wire supply speed, traveling speed in a movement section between the nodal points, stopping time at the nodal points, weaving speed and weaving width to maintain a uniform deposition amount per unit volume using at least one of a current value and a voltage value of a current detection sensor or a voltage detection sensor.

The copper shoe device includes: a streamlined recess which is formed on one side of the copper shoe device and is rostrocaudally asymmetric; and a receiving groove which is formed at a lower portion of the recess to be filled with molten metal.

The copper shoe device is formed in a plate type to come into contact with the surface of the parent metal, and the recess is concavely formed on the side coming into contact with the surface of the parent metal in order to cover the bevel of the parent metal in the rostrocaudal direction. The recess extends in a conveying direction of the traveling device part, and the receiving groove which is formed at the lower portion of the recess is formed in a stepped jaw shape to be hollowed from the recess to receive molten metal.

The horizontal butt joint high deposition welding apparatus further includes: a torch x-axis slide assembly which is combined to the traveling axis part of the traveling device part; a torch z-axis slide assembly which is connected to the torch x-axis slide assembly to slide in a perpendicular direction. The copper shoe device is connected to the torch z-axis slide assembly to move in the conveying direction of the traveling device part, in the perpendicular direction of the parent metal and in the direction to come into contact with the parent metal.

In another aspect of the present invention, the present invention provides a horizontal butt joint high deposition welding method using a horizontal butt joint high deposition welding apparatus, which includes: a traveling device part for periodically repeating weaving and conveying of a welding tip in a specific direction relative to an upper parent metal and a lower parent metal; a welding torch which has a welding tip and is mounted on the traveling device part; a copper shoe device which is mounted on the traveling device part to be located in a welding direction by the welding tip, the copper shoe device moving in the welding progress direction to prevent molten metal from running down; and a control unit for controlling welding conditions according to weaving positions of the welding torch in consideration of a bevel form of a horizontal welding joint, and the welding method includes: a welding current calculating step or a welding voltage calculating step for calculating welding current or welding voltage in a movement section between nodal points by the control unit; a stopping time calculating step or a traveling speed calculating step for calculating stopping time or traveling speed at each of the nodal points by the control unit; and a deposited welding step of carrying out deposited welding to the bevel without carrying out root pass welding by controlling a welding machine and the traveling device part according to the welding current and the welding voltage of each movement section between the nodal points calculated in the welding current and voltage calculating step and the stopping time or traveling speed at each nodal point calculated in the stopping time calculating step or the traveling speed calculating step.

In case of the welding current and the welding voltage calculated in the welding current calculating step or the welding voltage calculating step, an initial value is set according to a gap (G) between the upper parent metal and the lower parent metal and the thickness of the parent metals, and one of welding current, welding voltage, wire supply speed, traveling speed in a movement section between the nodal points, stopping time at the nodal points, weaving speed and weaving width is controlled to be changed in real time by the gap (G) between the upper parent metal and the lower parent metal.

In case of the stopping time at each nodal point calculated in the stopping time calculating step, if the entire stopping time for producing an indefective bead is T1, the stopping time at nodal points of a rear bead (B), which carries out welding of the inside of the bevel and the stopping time at nodal points between the rear bead (B) and a surface bead (F) are 0.2*T1 within an error range of about ±10%, and the stopping time at the nodal point of the surface bead (F) is 0.8*T1 within an error range of about ±10%.

The horizontal butt joint high deposition welding method further includes a wire supply speed setting step that calculates a wire supply speed for supplying a proper amount of wire for welding while stopping at each nodal point and moving between the nodal points. In case of the wire supply speed calculated in the wire supply speed setting step, an initial value at the nodal points for forming the rear bead (B) between the upper parent metal and the lower parent metal is set by the gap (G) between the upper parent metal and the lower parent metal, and the wire supply speed is calculated to increase more than the initial value at the nodal points located between the nodal points for forming the rear bead (B) and the surface bead (F) in proportion to the vertical width of the cross section of the bevel.

As described above, the horizontal butt joint high deposition welding apparatus and the method therefor according to the present invention can complete horizontal butt welding by high deposition welding of one or two passes regardless of the thickness of the parent metal, thereby remarkably reducing the number of the passes and considerably enhancing speed of welding work.

Moreover, the horizontal butt joint high deposition welding apparatus and the method therefor according to the present invention can carry high deposition welding on the inside and the surface of the welded cross section without defect by controlling current, voltage, wire supplying speed and stopping time in proportion to the cross section width of the bevel during weaving welding and diagonal traveling welding, thereby remarkably enhancing welding quality.

Furthermore, the horizontal butt joint high deposition welding apparatus and the method therefor according to the present invention can inject a gas to the molten metal in the forward direction to the welding direction by the copper shoe device, thereby preventing the molten metal from running down, allowing the user to easily handle the apparatus and reducing weight in comparison with the conventional reverse direction gas injection structure, and completing the surface bead by filling the lower part with the molten metal because the asymmetric lower recess is formed on the surface of the copper shoe device.

### BRIEF DESCRIPTION OF THE DRAWINGS

The above and other objects, features and advantages of the present invention will be apparent from the following detailed description of the preferred embodiments of the invention in conjunction with the accompanying drawings, in which:
FIG. 1 is a view showing a welded state after root pass at the time of a conventional automatic welding;
FIG. 2 is a view showing a conventional welding tip;
FIG. 3 is a sectional view of welded parts by the conventional welding apparatus;
FIG. 4 is an exploded perspective view of a horizontal butt joint welding apparatus according to a preferred embodiment of the present invention;
FIG. 5 is a plan view of the horizontal butt joint welding apparatus according to the preferred embodiment of the present invention;
FIG. 6 is a right side view of the horizontal butt joint welding apparatus according to the preferred embodiment of the present invention;
FIG. 7 is a perspective view of a copper shoe device according to a preferred embodiment of the present invention;
FIG. 8 is a side sectional view showing a conventional copper she device;
FIG. 9 is a side sectional view showing the copper shoe device according to the preferred embodiment of the present invention;
FIG. 10 is a sectional view of a welding torch according to a preferred embodiment of the present invention;
FIG. 11 is a schematic block diagram of the horizontal butt joint welding apparatus according to the preferred embodiment of the present invention;
FIG. 12 is a flow chart showing a horizontal butt joint high deposition welding method according to a preferred embodiment of the present invention;
FIG. 13 is a view showing a moving control state of a control unit for a particular weaving pattern according to the preferred embodiment of the present invention;
FIG. 14 is a graph showing welding conditions at nodal points of the particular weaving pattern according to the preferred embodiment of the present invention;
FIG. 15 is a view showing a weaving motion by an orthogonal weaving axis part according to a preferred embodiment of the present invention;
FIG. 16 is a view showing a welding motion in a traveling direction and a wire according to a preferred embodiment of the present invention;
FIGS. 17 and 18 are sectional views of the welded part by the horizontal butt joint high deposition welding apparatus according to the preferred embodiment of the present invention.

### DETAILED DESCRIPTION OF THE PREFERRED EMBODIMENT

Hereinafter, a horizontal butt joint high deposition welding apparatus and a method therefor according to a preferred embodiment of the present invention will be described in detail with reference to the attached drawings.

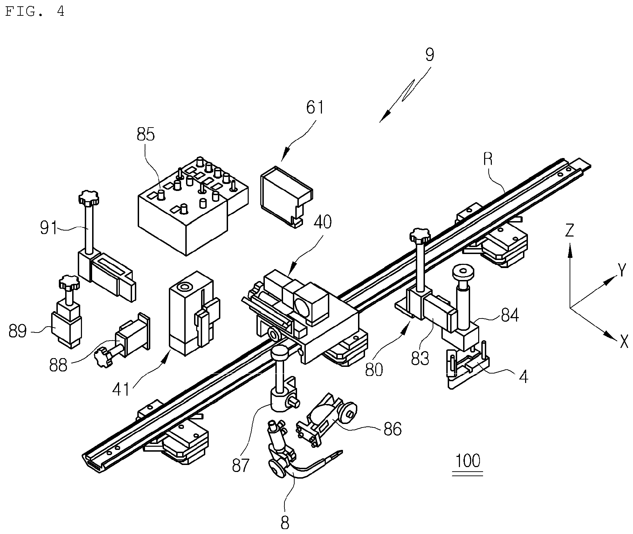

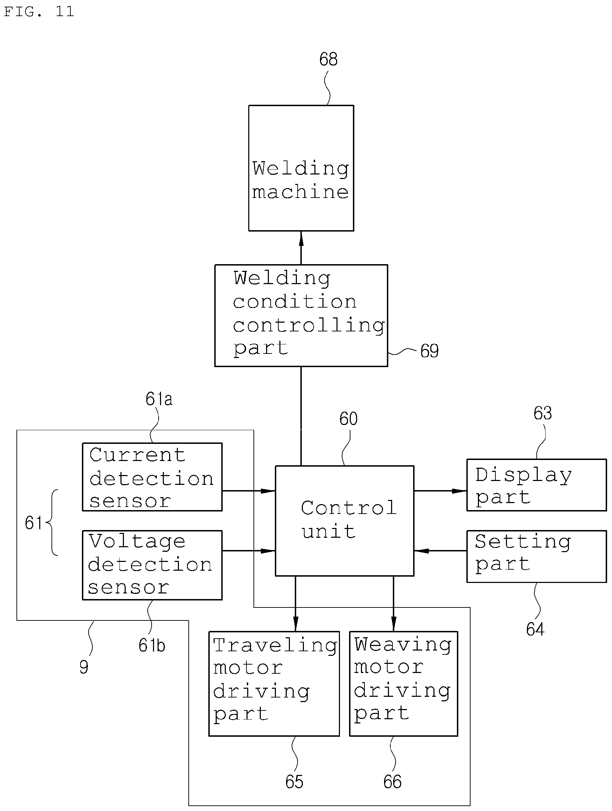

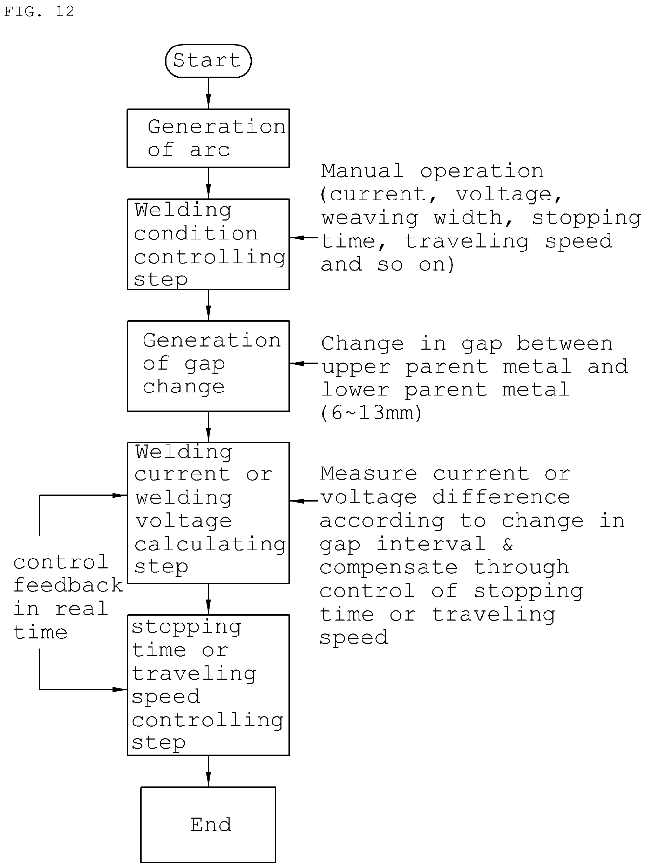

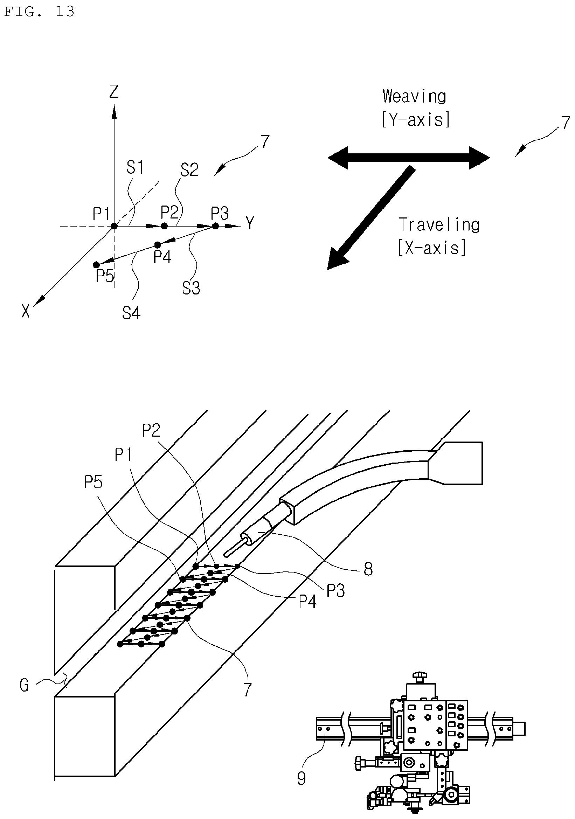

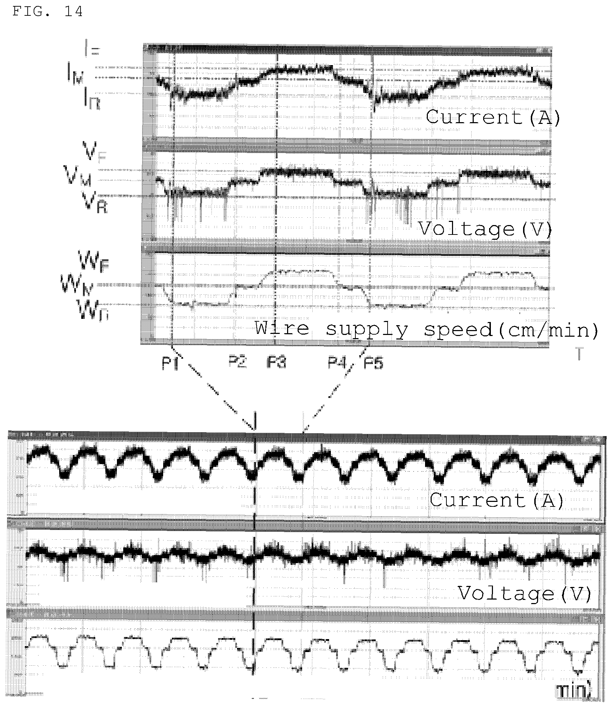

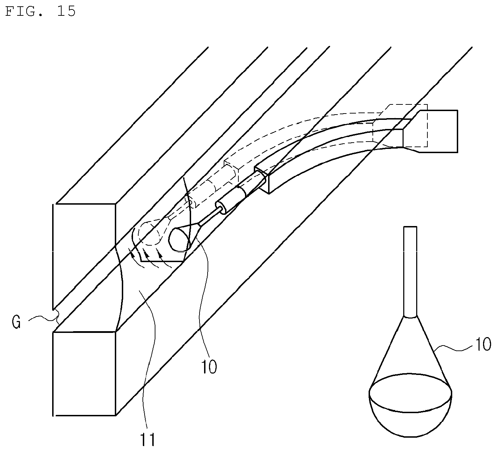

Referring to FIGS. 4 to 18, the horizontal butt joint high deposition welding apparatus 100 according to a preferred embodiment of the present invention includes: a traveling device part 9 which transfers a welding tip 32 in vertical and diagonal directions relative to a bevel of an upper parent metal 1a and a bevel of a lower parent metal 1b; a welding torch 8 which has the welding tip 32 and is mounted to the traveling device part 9; a copper shoe device 4 mounted on the traveling device part 9 to be located in a welding direction by the welding tip 32; a control unit 60 which controls welding conditions by positions of the bevels of a horizontal butt joint in order to maintain a fixed deposition amount to prevent the macro cross section 53, on which a welded side is not formed, from being formed on the upper parent metal 1a; a display part 63 for displaying a welded state; a setting part 64 for setting welding parameters; and a welding machine 68 for supplying welding voltage and current to the welding torch 8.

In FIG. 4, a 'vertical and rostrocaudal direction' means an x-axis direction, a 'slidably carrying direction of the traveling device part' means a y-axis direction, and a 'direction heading for the welded side' means a z-axis direction. For convenience in description, the directions are indicated as x-y-z directions.

The traveling device part 9 includes a traveling axis part 40 slidably connected along a guide rail R. The traveling axis part 40 functions as a carrier to carry the welding torch 8 and the copper shoe device 4 in the y-axis direction. A torch x-axis slide assembly 91 is combined to the traveling axis part 40 in order to operate the welding torch 8 in the x-axis direction. A torch y-axis slide assembly 88 is combined to the torch x-axis slide assembly 91 in order to operate the welding torch 8 in the y-axis direction, and a torch z-axis slide assembly 89 is combined to the torch y-axis slide assembly 88 in order to operate the welding torch 8 in the z-axis direction.

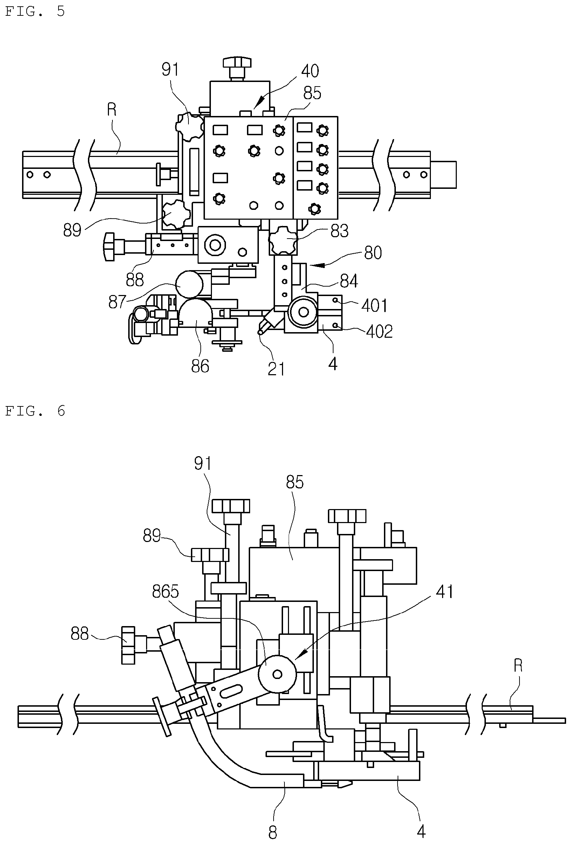

Additionally, an orthogonal weaving axis part 41 is combined to the torch y-axis slide assembly 89, and a worm slide assembly 87 is combined to the orthogonal weaving axis part 51. The worm slide assembly 87 is connected to the orthogonal weaving axis part 41 to slide in the y-axis and z-axis directions. An angle slide assembly 86 is connected to the worm slide assembly 87, and the worm slide assembly 87 changes its rotation direction to rotate the angle slide assembly 86 on an angle shaft 865 illustrated in FIG. 6. When a user adjusts a handle to operate a spring mounted inside the angle slide assembly 86, the angle slide assembly 86 slides in the x-axis and y-axis directions. The welding torch 8 is combined to the angle slide assembly 86. In addition, a sensor part 61 and a control box 85 are mounted onto the traveling axis part 40.

The copper shoe device 4 is mounted to the traveling device part 9. In more detail, a copper shoe device actuating assembly 80 is combined to the traveling axis part 40 of the traveling device part 9, and the copper shoe device 4 is connected to the copper shoe device actuating assembly 80. The copper shoe device actuating assembly 80 includes a copper shoe device x-axis slide assembly 83 and a copper shoe device z-axis slide assembly 84. The copper shoe device x-axis slide assembly 83 is fixed to the traveling axis part 40 to slide in the y-axis direction along the guide rail R and slides the copper shoe device 4 in the x-axis direction. The copper shoe device z-axis slide assembly 84 is connected to the copper shoe device x-axis slide assembly 83 to slide in the x-axis direction. The copper shoe device 4 is connected to the z-axis slide assembly 84. Finally, the copper shoe device 4 is carried in the y-axis direction along the guide rail R to be able to slide in the x-axis direction, and moves in the z-axis direction to come into contact with the parent metal.

The copper shoe device 4 moves cooling water to prevent molten metal and slag from being discharged out during welding. That is, the copper shoe device 4 prevents the molten metal from running down to the surface even though a deposition amount increases, and so, makes high deposition welding possible and completes welding with a small number of passes during automatic welding, thereby preventing welding defect, enhancing welding quality, and reducing working hours. A front gas injection part 21 and a gas outlet 21a for spraying forward gas in the welding progress direction are formed on the copper shoe device 4. The copper shoe device 4 is mounted to the welding apparatus 100 to spray a protective gas in the welding progress direction, comes into contact with a contact portion where the upper parent metal 1a and the lower parent metal 1b meet together so as to prevent external air, which deteriorates the mechanical property of the welded part, from being induced into the molten metal. The welding tip which is located at an end of the welding torch 8 has the outer diameter of less than 8mm, preferably, less than 5mm. The welding torch 8 includes an insulating coating layer 33 made of ceramic formed on the outer circumferential surface of the welding torch 8. The welding torch 8 is small in outer diameter and has the insulating coating layer 33 formed on the surface thereof so as to smoothly weave inside the bevel due to the small welding tip, and can provide a continuous welding because the insulating coating layer 33 prevents electric short even though the welding tip 32 comes into contact with the bevel.

As described above, the traveling device part 9 includes: a traveling axis part 40 for moving the welding apparatus 100 along the guide rail R; the orthogonal weaving axis part 41 for carrying out a weaving motion to convey the welding torch 8 in the perpendicular direction of the welding bevel that is perpendicular to the guide rail R; and a sensor part 61 for detecting welding current and welding voltage. A traveling motor driving part 65 is disposed on the traveling axis part 40 and a weaving motor driving part 66 is disposed on the orthogonal weaving axis part 41. Moreover, the sensor part 61 includes a welding current detection sensor 61a for detecting welding current and a welding voltage detection sensor 61b for detecting welding voltage.

Furthermore, a welding condition controlling part 69 is disposed to receive a welding condition control signal sent from the control unit 60 based on a detection value received by the welding current detection sensor 61a and the welding voltage detection sensor 61b and control welding current and welding voltage of the welding machine 68.

The control unit 60 controls voltage and current of an arc produced from the welding torch 8, movement and stopping time of the traveling axis part, and wire supply speed by each position of the bevel so as to carry out high deposition welding to have a particular weaving pattern 7, thereby welding more than 50%, preferably, more than 80% of the whole bevel area by the first pass welding, without carrying out root pass welding which forms a root part relative to a gap formed between the two parent metals 1a and 1b.

The control unit 60 which makes high deposition welding possible during the first pass welding detects changes in welding output current and voltage, which are generated by a difference in wire resistances through changes in wire projection length 12 corresponding to various changes of gaps, by the welding current detection sensor 61a and the welding voltage detection sensor 61b. Moreover, the control unit 60 controls the traveling motor driving part 65 and the weaving motor driving part 66 to change the actual traveling speed 13 of the welding apparatus 100 in order to maintain a fixed deposition amount per unit volume.

In this instance, a change in the actual traveling speed through an arc sensing can be selected by the setting part 64. In case that welding is carried out in fixed welding conditions, such as current, voltage and welding speed, when the gap increases, namely, when bevel unit volume increases, the increased bevel unit volume is not sufficiently filled with the deposition amount by the fixed welding conditions, so that a distance between the welding arc forming spot and the end of the welding tip, namely, the wire projection length 12, is increased. Accordingly, the output current and voltage values sent to the welding current detection sensor 61a and the welding current detection sensor 61b are reduced by ^{-Δ} A and ^{-Δ} V. The control part 60 controls the traveling motor driving part 65 and the weaving motor driving part 66 to reduce traveling speed of the traveling device part 9, so that the deposition amount per unit volume is increased. Accordingly, the wire projection length 12 is reduced again, and hence, the output current and voltage values sent to the welding current detection sensor 61a and the welding current detection sensor 61b are increased by ^{+Δ} A and ^{+Δ} V. Therefore, the fixed deposition amount per unit volume can be maintained.

Particularly, the copper shoe device 4 includes a forward gas spraying part for spraying gas in the welding progress direction. That is, the copper shoe device 4 has the front gas injection part 21 and the gas outlet 21a for spraying forward gas in the welding progress direction so as to prevent the molten metal from running down by spraying gas in the forward direction while moving in the welding progress direction.

Compared with the structure to spray gas in the reverse direction, the structure to spray gas in the reverse direction is inconvenient in handling the apparatus and is increased in weight because it requires three gas connection lines, but the structure to spray gas in the forward direction is easy in handling the apparatus and is reduced in weight because it requires just one gas connection line.

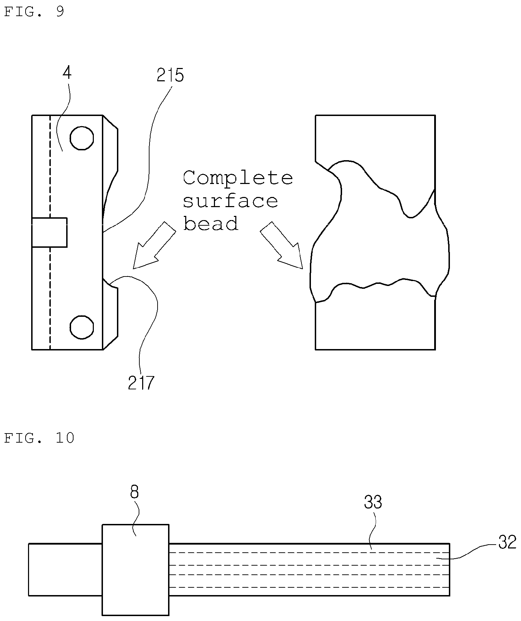

Referring to FIG. 5, the copper shoe device 4 includes a cooling water inlet 401 for inducing cooling water and a cooling water outlet 402 for discharging cooling water. Additionally, a streamlined recess 215 is formed on one side of the copper shoe device 4 from which gas is sprayed in the forward direction. The side of the copper shoe device 4 on which the streamlined recess 215 is formed gets in contact with the surface of the parent metal. The recess 215 is rostrocaudally asymmetric, and a receiving groove 217 is formed at a lower portion of the recess 215 to be filled with molten metal. In other words, as shown in FIG. 9, the recess 215 has the receiving groove 217 concavely formed in the form of a stepped jaw at the lower portion thereof so as to be rostrocaudally asymmetrical.

In more detail, the copper shoe device 4 is formed in an approximately rectangular plate type so as to come into contact with the surface of the parent metal, and the recess 215 is concavely formed on the side facing the surface of the parent metal in order to cover the bevel of the parent metal in the rostrocaudal direction. The receiving groove 217 which is formed at the lower portion of the recess 215 in the stepped jaw shape is hollowed more from the recess 215 to receive molten metal. The gas outlet 21a is formed at the recess 215. The recess 215 extends in the conveyance direction of the traveling device part.

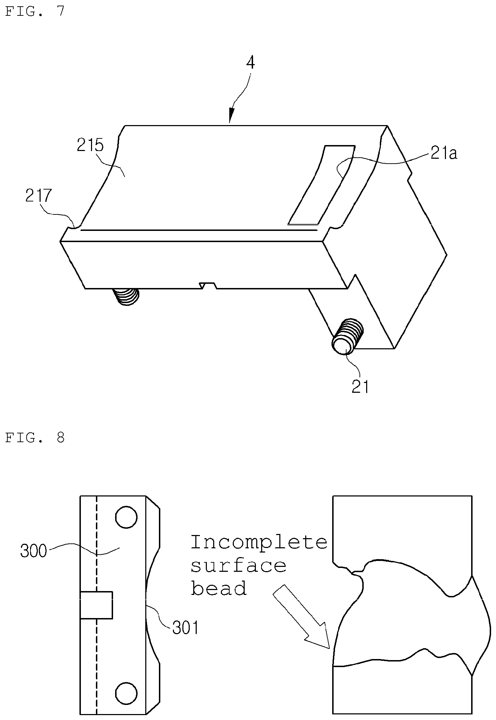

Compared with a recess 301 formed in a conventional copper shoe device 300 illustrated in FIG. 8, the structure illustrated in FIG. 8 cannot completely form a surface bead but the structure illustrated in FIG. 9 can form a competent surface bead because the receiving groove 217 is filled with molten metal.

In the meantime, the horizontal butt joint deposited welding method according to the present invention carries out horizontal butt joint welding without carrying out root pass welding to the upper parent metal 1a which has the bevel on the bottom surface and the lower parent metal 1b which has no bevel using the horizontal butt joint high deposition welding apparatus 100 which includes the traveling device part 9 having the orthogonal weaving axis part 41 and the traveling axis part 40, the copper shoe device 4, the welding torch 8 and the control unit 60.

The horizontal butt joint high deposition welding method includes: a welding current and voltage calculating step of forming a plurality of nodal points which divide a course to carry out weaving welding and diagonal welding on the basis of a gap G between the two parent metals determined by the thickness of the two parent metals, calculating initial values of welding voltage and welding current at two nodal points, namely, a first nodal point P1 and a fifth nodal point P5 which carry out welding at a forming position of a rear bead B, out of a number of nodal points, namely, first to fifth nodal points P1 to P5, for particular weaving pattern welding which carries out stop welding with stopping time at each nodal point and values of welding voltage and welding current calculated in relation with the initial values at the nodal point, namely, the third nodal point P3, of the forming position of a surface bead F and at a plurality of the divided nodal points, namely, the second nodal point P2 and the fourth nodal point P4, between the first nodal point P1 and the fifth nodal point P5 of the forming position of the rear bead B and the third nodal point of the forming position of the surface bead F, and transferring the calculated values to the welding machine 68; a stopping time calculating step of calculating stopping time at the first nodal point P1 to the fifth nodal point P5 based on the gap G between the two parent metals 1a and 1b by the control unit 60; and a high deposition welding step of carrying out high deposition welding by the particular weaving pattern by the stopping time at each nodal point and the welding current and welding voltage calculated between the nodal points.

The welding current and the welding voltage calculated through the welding current and voltage calculating step are varied to set initial values according to the width of the gap G and to increase proportionally to the vertical width of the cross section of the bevel of the third nodal point P3 which forms the surface bead F at the first nodal point P1 and the fifth nodal point P5 forming the rear bead B.

Additionally, in relation with the stopping time at each nodal point calculated during the stopping time calculating step, in case that the stopping time for preheating at the first nodal point P1 and the fifth nodal point P5 for forming the rear bead B and producing an indefective bead is T1, stopping times T2 and T4 at the nodal points between the two nodal points P1 and P5 for forming the rear bead B which carries out welding of the inside of the bevel and the nodal point for forming the surface bead F are 0.2*T1 within an error range of about ±10%, and the stopping time at the nodal point for forming the surface bead F is 0.8*T1 within an error range of about ±10%.

Moreover, the horizontal butt joint high deposition welding method according to the present invention further includes a wire supply speed setting step that calculates wire supply speed for supplying a proper amount of wire to carry out welding while stopping at each nodal point and moving between the nodal points.

The initial value at the nodal points for setting the rear bead B is set by the gap G, and the wire supply speed calculated in the wire supply speed calculating step is calculated to increase more than the initial value in proportion to the vertical width of the cross section of the bevel at the nodal points located between the nodal points for forming the rear bead B and the nodal point for forming the surface bead F.

The high deposition welding step directly carries out high deposition welding of the first pass inside the bevel of the welding progress side without carrying root pass welding to remove a step difference between the upper parent metal and the lower parent metal on the opposite side of the welding progress side.

In other words, in the deposited welding step, welding is controlled to have different stopping times, voltages, currents and wire supply speeds at the nodal points, and movement speed between the nodal points is controlled to have a value varied according to the width of the gap G. Satisfaction of welding conditions at each nodal point or welded part is determined by the welding current and welding voltage detected by the welding current detection sensor 61a and the welding voltage detection sensor 61b. Furthermore, the stopping time at each nodal point and movement between the nodal points are carried out by the traveling motor driving part 65 and the weaving motor driving part 66.

Additionally, the welding current, the welding voltage and the wire supply speed are controlled by the control unit 60 which controls the welding machine 68.

The particular weaving pattern 7 is made through combination of the orthogonal weaving axis part 41 and the traveling axis part 40 which are located inside the welding apparatus 100. The particular weaving pattern 7 carries out weaving traveling in a section of the first nodal point P1 which is the first root part → the second nodal point P2 which is the first middle part → the third nodal point P3 which is the surface part so that only the orthogonal weaving axis part 41 moves in the Y-axis direction and carries out diagonal traveling in a section of the third nodal point P3 which is the surface part → the fourth nodal point P4 which is the second middle part → the fifth nodal point P5 which is the second root part so that the orthogonal weaving axis part 41 and the traveling axis part 40 operate at the same time to weave in the diagonal direction.

Moreover, the stopping time T to stop at each nodal point to produce a fixed deposition amount and conveying speed S between the nodal points have a predetermined speed value proportional to the width of the gap G determined by the thickness of the parent metal, and the welding current and the welding voltage have the minimum values at the first nodal point P1 and the fifth nodal point P5 which form the rear bead B and the maximum values at the third nodal point P3 which forms the surface bead F. Furthermore, the nodal points located between the first nodal point P1 and the fifth nodal point P5 for forming the rear bead B and the third nodal point P3 for forming the surface bead F have sizes proportional to the width of the cross section of the bevel.

In order to carry out the horizontal butt joint deposited welding by the particular weaving pattern 7, when an inclined plane is formed on the bottom surface of the upper parent metal 1a, the bevel as the welded part between the lower parent metal 1b and the upper parent metal 1a is formed.

An example of control of welding conditions for carrying out horizontal butt joint welding by each nodal point to the two iron parent metals with a thickness of 23mm using the particular weaving pattern 7 having the five nodal points P1 to P5 will be described as follows. At the first nodal point P1 and the fifth nodal point P5 for forming the rear bead B, there is stopping time of one second for preheating. Furthermore, at the second nodal point P2 and the fourth nodal point P4 for carrying out welding inside the bevel, there is stopping time of 0.2 seconds, and at the third nodal point P3 for forming the surface bead F, there is stopping time of about 0.8 seconds for preheating and forming molten metal of high capacity.

Additionally, the welding current IR and the welding voltage VR of the first nodal point P1 and the fifth nodal point P5 are controlled to have 263A and 31.2V within an error range of about ±10%, the welding current IM and the welding voltage VM of the second nodal point P2 and the fourth nodal point P4 are controlled to have 359A and 33.2V within an error range of about ±10%, and the welding current IF and the welding voltage VF at the third nodal point P3 is controlled to have 421A and 35.7V within an error range of about ±10%. In addition, the moving speed between the nodal points P1 to P5 is maintained uniformly at 2cm/sec, and is increased to have a predetermined speed value in proportion to the width of the gap G or the bevel.

Moreover, the wire supply speed WR between the first nodal point P1 and the second nodal point P2 is 1028cm/min within an error range of about ±10%, the wire supply speed WM between the second nodal point P2 and the third nodal point P3 is 1727cm/min within an error range of about ±10%, the wire supply speed WF between the third nodal point P3 and the fourth nodal point P4 is 2139cm/min within an error range of about ±10%, and the wire supply speed WM between the fourth nodal point P4 and the fifth nodal point P5 is 1727cm/min within an error range of about ±10%. Furthermore, carriage traveling speed is average about 10.6cm/min from the first nodal point P1 to fifth nodal point P5.

After the upper parent metal 1a and the lower parent metal 1b are arranged to form the gap G which has a width according to the thickness of the parent metals 1a and 1b, the welding current, the welding voltage, the wire supply speed and the traveling device part moving speed of the particular weaving pattern 7 at each welded part are calculated when the welding current and voltage calculating step (S10), the stopping time calculating step (S20) and the wire supply speed calculating step (S30) of FIG. 10 are carried out based on the formed gap G, and then, the deposited welding step (S100) is carried out.

In the deposited welding step (S100), because the stopping time is the longest at the first nodal point P1 and the fifth nodal point P5 for forming the rear bead B, when the molten metal of high capacity is formed, the rear bead B of indefective quality can be formed without carrying out root pass welding.

When horizontal butt joint welding is carried out by applying the welding method to the horizontal butt joint deposited welding apparatus 100, a large molten metal 56 is formed through the stopping time at each of the first nodal point P1 to the fifth nodal point P5. In this instance, the supplied welding current and voltage are calculated by the welding current and voltage calculating step according to the thickness of the upper parent metal 1a and the lower parent metal 1b. In the welding current and voltage calculating step (S10), when the welding current and the welding voltage are calculated, the moving speed of each nodal point is also calculated.

Because the performance of the particular weaving pattern 7 minimizes the diameter of the welding tip 32 of the welding torch 8 and forms the insulating coating layer 33 on the outer circumferential surface, it makes the welding tip weave freely and prevents stop of arc generation by insulation even though the upper parent metal 1a or the lower parent metal 1b and the welding tip 32 get in contact with each other. That is, the particular weaving pattern 7 is difficult to carry out weaving of the welding tip 32 in case that the welding torch 8 of the present invention is not applied, and cannot be easily operated because of stop of arc generation in case that the welding tip 32 which is not insulated comes into contact with the upper parent metal 1a and the lower parent metal 1b.

Next, while the above welding step is carried out, the copper shoe device 4 injects the gas 5 to the molten metal 56 by control of the control unit 60. The copper shoe device 4 injects gas in the forward direction of the welding progress direction in consideration of the amount of the molten metal produced by the control unit 60 using information of welding current and welding voltage and traveling control information of the orthogonal weaving axis part 41 and the traveling axis part 40. After the molten metal 56 is formed, the movement direction, speed and stopping time of the orthogonal weaving axis part 41 and the traveling axis part 40 are controlled according to the stopping time and the moving speed between the nodal points which are calculated by the stopping time calculating step. When arc is generated according to the welding current and the welding voltage at each welding position, welding by the particular weaving pattern 7 is carried out between the upper parent metal 1a and the lower parent metal 1b.

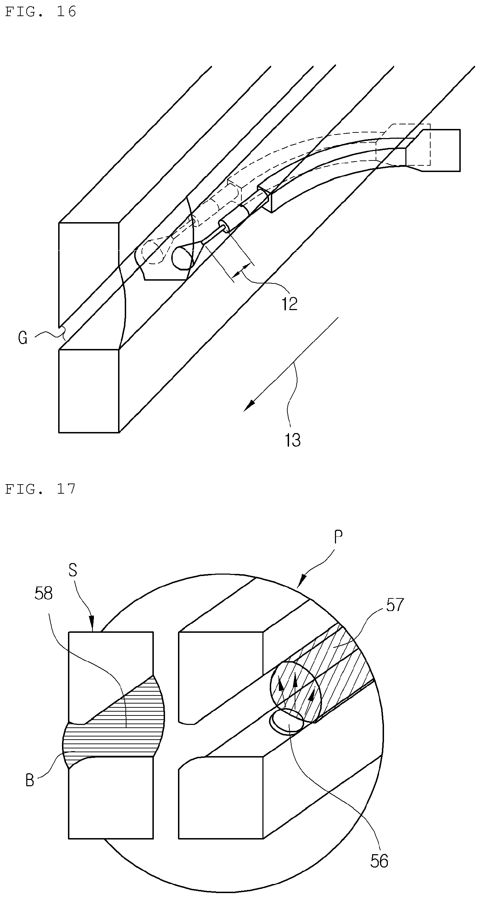

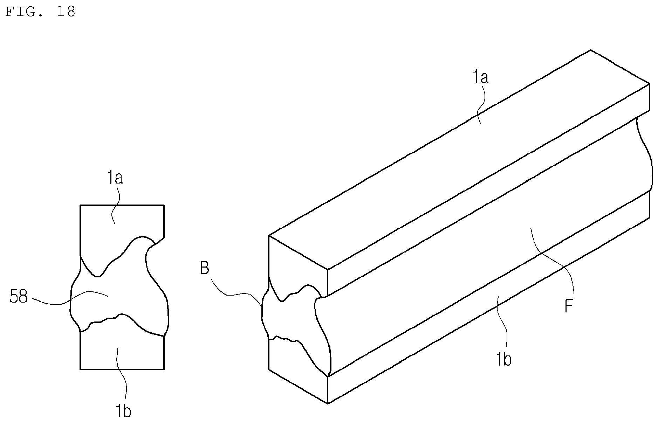

In other words, in case that horizontal butt joint welding is carried out to the two parent metals through the horizontal butt joint deposited welding method which carries out the welding condition control of the particular weaving pattern 7, the welding current, the welding voltage, the stopping time, the wire supply speed and the traveling speed are calculated by welding of the first pass to weld 50% to 100% of the welded part. Therefore, when the initial deposited welding which is the first pass welding inside the bevel is carried out without performing root pass welding, as shown in FIGS. 17 and 18, the present invention can perform deposited welding of 50% to 100% having the rear bead B and the surface bead F with good quality by a single welding. Therefore, the present invention can perform horizontal butt joint welding through one or two passes because it just carries out welding of the remaining part, namely, 50% to 0% of the welded part, thereby remarkably reducing the number of passes for horizontal butt joint welding.

As described above, while the present invention has been particularly shown and described with reference to the example embodiments thereof, it will be understood by those of ordinary skill in the art that the above embodiments of the present invention are all exemplified and various changes, modifications and equivalents may be made therein without changing the essential characteristics and scope of the present invention. Therefore, it would be understood that the technical and protective scope of the present invention shall be defined by the technical idea of the following claims.

## Claims

1. A horizontal butt joint high deposition welding apparatus comprising:
a traveling device part for periodically repeating weaving and conveying of a welding tip in a specific direction relative to an upper parent metal and a lower parent metal;
a welding torch which has a welding tip and is mounted on the traveling device part;
a copper shoe device which is mounted on the traveling device part to be located in a welding direction by the welding tip; and
a control unit for controlling welding conditions according to weaving positions of the welding torch in consideration of a bevel form of a horizontal welding joint,
wherein the control unit conveys the traveling device part to perform weaving traveling along a plurality of nodal points and controls one of welding current, welding voltage, wire supply speed, traveling speed in a movement section between the nodal points, stopping time at the nodal points, weaving speed and weaving width to carry out high deposition welding relative to the bevels.

2. The horizontal butt joint high deposition welding apparatus according to claim 1, wherein the copper shoe device includes a forward gas spraying part for spraying gas in the welding progress direction to prevent molten metal from running down.

3. The horizontal butt joint high deposition welding apparatus according to claim 1, wherein an initial value is set according to a gap (G) between the upper parent metal and the lower parent metal and the thickness of the parent metals, and one of welding current, welding voltage, wire supply speed, traveling speed in a movement section between the nodal points, stopping time at the nodal points, weaving speed and weaving width is controlled to be changed in real time by the gap (G) between the upper parent metal and the lower parent metal.

4. The horizontal butt joint high deposition welding apparatus according to claim 1, wherein if the entire stopping time for producing an indefective bead is T1, the stopping time at nodal points of a rear bead (B), which carries out welding of the inside of the bevel and the stopping time at nodal points between the rear bead (B) and a surface bead (F) are 0.2*T1 within an error range of about ±10%, and the stopping time at the nodal point of the surface bead (F) is 0.8*T1 within an error range of about ±10%.

5. The horizontal butt joint high deposition welding apparatus according to claim 1, wherein the wire supply speed is calculated to set an initial value at the nodal points for forming the rear bead (B) by the gap (G) and is calculated to increase more than the initial value at the nodal points located between the nodal points for forming the rear bead (B) and the surface bead (F) in proportion to the vertical width of the cross section of the bevel.

6. The horizontal butt joint high deposition welding apparatus according to claim 1, wherein the control unit controls one of welding current, welding voltage, wire supply speed, traveling speed in a movement section between the nodal points, stopping time at the nodal points, weaving speed and weaving width to maintain a uniform deposition amount per unit volume using at least one of a current value and a voltage value of a current detection sensor or a voltage detection sensor.

7. The horizontal butt joint high deposition welding apparatus according to claim 1, wherein the copper shoe device includes: a streamlined recess which is formed on one side of the copper shoe device and is rostrocaudally asymmetric; and a receiving groove which is formed at a lower portion of the recess to be filled with molten metal.

8. The horizontal butt joint high deposition welding apparatus according to claim 1, wherein the copper shoe device is formed in a plate type to come into contact with the surface of the parent metal, and the recess is concavely formed on the side coming into contact with the surface of the parent metal in order to cover the bevel of the parent metal in the rostrocaudal direction, and
wherein the recess extends in a conveying direction of the traveling device part, and the receiving groove which is formed at the lower portion of the recess is formed in a stepped jaw shape to be hollowed from the recess to receive molten metal.

9. The horizontal butt joint high deposition welding apparatus according to claim 1, further comprising:
a torch x-axis slide assembly which is combined to the traveling axis part of the traveling device part;
a torch z-axis slide assembly which is connected to the torch x-axis slide assembly to slide in a perpendicular direction,
wherein the copper shoe device is connected to the torch z-axis slide assembly to move in the conveying direction of the traveling device part, in the perpendicular direction of the parent metal and in the direction to come into contact with the parent metal.

10. A horizontal butt joint high deposition welding method using a horizontal butt joint high deposition welding apparatus, which includes: a traveling device part for periodically repeating weaving and conveying of a welding tip in a specific direction relative to an upper parent metal and a lower parent metal; a welding torch which has a welding tip and is mounted on the traveling device part; a copper shoe device which is mounted on the traveling device part to be located in a welding direction by the welding tip, the copper shoe device moving in the welding progress direction to prevent molten metal from running down; and a control unit for controlling welding conditions according to weaving positions of the welding torch in consideration of a bevel form of a horizontal welding joint, the welding method comprising:
a welding current calculating step or a welding voltage calculating step for calculating welding current or welding voltage in a movement section between nodal points by the control unit;
a stopping time calculating step or a traveling speed calculating step for calculating stopping time or traveling speed at each of the nodal points by the control unit; and
a deposited welding step of carrying out deposited welding to the bevel without carrying out root pass welding by controlling a welding machine and the traveling device part according to the welding current and the welding voltage of each movement section between the nodal points calculated in the welding current and voltage calculating step and the stopping time or traveling speed at each nodal point calculated in the stopping time calculating step or the traveling speed calculating step.

11. The welding method according to claim 10, wherein in case of the welding current and the welding voltage calculated in the welding current calculating step or the welding voltage calculating step, an initial value is set according to a gap (G) between the upper parent metal and the lower parent metal and the thickness of the parent metals, and one of welding current, welding voltage, wire supply speed, traveling speed in a movement section between the nodal points, stopping time at the nodal points, weaving speed and weaving width is controlled to be changed in real time by the gap (G) between the upper parent metal and the lower parent metal.

12. The welding method according to claim 10, wherein in case of the stopping time at each nodal point calculated in the stopping time calculating step, if the entire stopping time for producing an indefective bead is T1, the stopping time at nodal points of a rear bead (B), which carries out welding of the inside of the bevel and the stopping time at nodal points between the rear bead (B) and a surface bead (F) are 0.2*T1 within an error range of about ±10%, and the stopping time at the nodal point of the surface bead (F) is 0.8*T1 within an error range of about ±10%.

13. The welding method according to claim 10, further comprising:
a wire supply speed setting step for calculating a wire supply speed to supply a proper amount of wire for welding while stopping at each nodal point and moving between the nodal points,
wherein in case of the wire supply speed calculated in the wire supply speed setting step, an initial value at the nodal points for forming the rear bead (B) between the upper parent metal and the lower parent metal is set by the gap (G) between the upper parent metal and the lower parent metal, and
wherein the wire supply speed is calculated to increase more than the initial value at the nodal points located between the nodal points for forming the rear bead (B) and the surface bead (F) in proportion to the vertical width of the cross section of the bevel.
